# NEUE EUROPÄISCHE PATENTSCHRIFT

(11) **EP 2 665 942 B2**
(45) Veröffentlichungstag und Bekanntmachung des Hinweises auf die Entscheidung über den Einspruch: **05.08.2020**
(45) Hinweis auf die Patenterteilung: 06.12.2017
(21) Anmeldenummer: 12704666.2
(22) Anmeldetag: 19.01.2012
(51) Int. Cl.: F16C 19/38, F16C 25/08, F03D 80/70

(54) **ROTORLAGER FÜR EINE WINDKRAFTANLAGE**
ROTOR BEARING FOR A WIND POWER GENERATING PLANT
PALIER DE ROTOR POUR UNE ÉOLIENNE

(30) Priorität: 19.01.2011 DE 102011008958
(43) Veröffentlichungstag der Anmeldung: 27.11.2013
(73) Patentinhaber: IMO Holding GmbH, 91350 Gremsdorf (DE)
(72) Erfinder: FRANK, Hubertus, 91351 Höchstadt (DE)
(74) Vertreter: Schmidt, Steffen J.
(86) Internationale Anmeldenummer: PCT/EP2012/000230
(87) Internationale Veröffentlichungsnummer: WO 2012/097989

(56) Entgegenhaltungen:
- EP-A2- 2 256 285
- DD-A1- 17 558
- DE-A1- 1 575 433
- DE-A1- 3 733 190
- DE-U- 1 929 815

## Beschreibung

Die Erfindung richtet sich auf ein Wälzlager, insbesondere auf ein Rotor- oder Hauptlager für eine Windkraftanlage, mit wenigstens zwei zueinander konzentrischen Ringen, die durch einen Spalt voneinander getrennt sind, worin ein oder mehrere Reihen von Wälzkörpern entlang von Laufbahnen an beiden Ringen entlang rollen, so dass die beiden Ringe um ihre gemeinsame Achse gegeneinander verdrehbar sind, wobei jeder Ring wenigstens eine ebene, ringförmige, vorzugsweise erhabene Anschlußfläche zum Anschluß an ein Maschinen- oder Anlagenteil, Chassis oder Fundament aufweist, wobei die Anschlußflächen parallel zueinander verlaufen und von einer Mehrzahl von Befestigungsbohrungen etwa lotrecht durchsetzt sind zum Hindurchstecken und/oder Einschrauben von Befestigungsschrauben, wobei einer der beiden Anschlussringe als sog. Nasenring ausgebildet ist mit einem rundum laufenden Bund, der an seiner ebenen Ober- und Unterseite mit einem Spalt von dem anderen Ring umgriffen wird.

Da größere Maschinen und Anlagen im Allgemeinen betriebswirtschaftlich günstiger sind als kleinere, gibt es einen beständigen Trend zu immer größeren Kapazitäten. Dies ist u.a. an der beständig steigenden Baugröße und Nennleistung von Windkraftanlagen besonders gut ablesbar, wenngleich ähnliche Effekte auch andernorts erkennbar sind, bspw. an immer größeren Schiffen und Flugzeugen. Im Zuge dieser Entwicklung gibt es auch einen Bedarf an immer größeren Wälzlagern für derartige Einrichtungen. Bei Windkraftanlagen betrifft dies vor allem die Hauptlager zur Abstützung des Rotors, ferner das Azimut- oder Maschinenhauslager zum Verschwenken der Gondel, und schließlich die Blattlager zur Veränderung des Anstellwinkels der Rotorblätter. Von diesen sind wiederum die Haupt- oder Rotorlager am stärksten beansprucht, da sie in axialer Richtung den mehrfachen Winddruck eines Blattlagers aufnehmen müssen, ferner in radialer Richtung das gesamte Gewicht des Rotors samt Nabe und Rotorblättern abstützen müssen und schließlich am beständigsten verdreht werden. Deshalb werden bei Windkraftanlagen bevorzugt 3-reihige Rollenlager als Hauptlager verwendet, insbesondere wegen ihrer deutlich höheren Lebensdauer im Vergleich zu anderen Wälzlager-Bauformen.

Bei allen Lagerungen, bei denen über schräg angeordnete Kontaktwinkel die Belastungen übertragen werden, erfahren die Lager durch die Nachgiebigkeit der Anschlusskonstruktion eine vermehrte Aufweitung. Dies macht sich in Form von höheren Schmiermittelleckagen, vermehrten Gleitbewegungen der Rollen im Stillstand, starker Ovalisierung der Lagerringe, usw. bemerkbar. Bei 3-reihigen Lagern, welche die Belastungen auf einer Radiallaufbahn mit 0° Tragwinkel und die Kippmomente und Axialbelastungen auf zwei Axialreihen mit 90° Tragwinkel übertragen, sind diese Effekte zwar geringer, ungeachtet dessen, ob Rollen oder Kugeln als lastübertragende Elemente verwendet werden.

Allerdings haben 3-reihige Rollenlager ein relativ enges Axialspiel, was sich insbesondere bei Anwendungen in Windkraftanlagen unangenehm bemerkbar macht.

Ferner sind Rollenlager deutlich empfindlicher gegen Stillstandserschütterungen als Kugellager. Daher ist man bestrebt, Lager für derartige Anwendungen möglichst unter Vorspannung laufen zu lassen.

Durch die Schraubenspannkräfte, welche die Befestigungsschrauben auf die Lagerringe ausüben, kann das axiale Lagerspiel weiter eingeengt werden, und bei ungünstiger Ringgeometrie kann es auch zu unerwünscht hohen Vorspannungen in den Axialreihen kommen.

Es gilt also, beim Einbau eines derartigen Lagers einen äußerst fragilen Kompromiß zwischen den verschiedenen Anforderungen zu finden: Zum Einen sollen diese Lager sehr leicht laufen, zum Anderen aber am besten spielfrei eingestellt sein. Bei Rotorlagern mit mehreren Metern Durchmesser ist eine solche Einstellung und Spielabstimmung sehr aufwendig, und bereits bei kleineren Veränderungen der Umgebungsbedingungen, bspw. bei Temperaturänderungen, kann das eingestellte Gleichgewicht im Bereich von Spielfreiheit und mäßiger Vorspannung empfindlich gestört werden. Außerdem stellen sich je nach Belastungsfall auf den einzelnen Axialbahnen und auf der Radialbahn sehr unterschiedliche Lastverteilungen ein. Bspw. kann es sogar Lastsituationen geben, in denen eine Axialreihe weitgehend oder vollständig lastfrei ist, wobei dann die dortigen Wälzkörper nicht oder nur unzureichend abrollen oder sogar still stehen. In diesem Fall schleifen die Wälzkörper über die Laufbahn und es kann zu einem gefürchteten, flächigen Verschleiß an den Wälzkörpern kommen, insbesondere in Form von Anschleifungen.
Die EP 2 256 285 A2 betrifft eine Bohranlagen-Lageranordnung, die einen Grundkörper mit einer Aufhängung sowie eine Aufnahme für ein Bohrgestänge aufweist, mit einer Lagerung zwischen dem Grundkörper und der Aufnahme für das Bohrgestänge, so dass das Bohrgestänge mittels eines Antriebsmittels gedreht werden kann. Für bestimmte Kugelreihen kann ein gesonderter Laufbahnring vorgesehen sein. Ferner ist bei keiner der dort vorgestellten Ausführungsformen eine Mehrzahl von Rollen mit jeweils in zueinander parallelen Ebenen liegenden Drehachsen vorgesehen.

Die DE 1 929 815 U offenbart ein Wälzlager, insbesondere Schwenk-Wälzlager, entweder in Form eines Kugellagers, in dessen Ringspalt ausschließlich kugelförmige Wälzkörper abrollen, oder in Form eines Kreuzrollenlagers, dessen rollenförmige Wälzkörper in einer einzigen Reihe angeordnet sind, jedoch abwechselnd gegeneinander verkippt sind, oder schließlich in Form eines kombinierten Kugel-Rollen-Lagers mit einer Kugelreihe und einer Rollenreihe.

Die DE 1 575 433 A1 zeigt ein mehrreihiges, dreiteiliges Wälzlager für die Lagerung schwerer, horizontal umlaufender Scheiben, insbesondere für Karusselldrehbänke. Dabei ist der Innenring in einen unteren Tragring und einen oberen Tragring unterteilt. Diese beiden Tragringe sind mittels durch Tellerfedern belasteten Bolzen verbunden. Zusammengesetzt bilden sie an ihrer Außenfläche eine rundum laufende Nut, worin der Außenring teilweise eingreift, unter Einhaltung eines Spaltes, in welchem sich mehrere Reihen von Rollen.

Die DD 17 558 A1 richtet sich auf einen Drehkranz für Krane, Bagger und sonstige Rotations- und Schwenkgeräte. Ein solcher Drehkranz umfasst einen Innenring und einen Außenring sowie einen U-förmigen Spalt zwischen diesen Ringen, worin sich mehrere Reihen von Zylinderrollen abwälzen. Die in den Spaltbereich ragende, rundum laufende Nase eines Nasenrings wird von dem anderen Ring oben und unten umgriffen. Um eine Montage zu ermöglichen, ist der den Nasenring umgreifende Ring in einer von der Lagerdrehachse lotrecht durchsetzten Ebene unterteilt in einen oberen und einen unteren Ring. Diese beiden Ringe werden mittels von je einer Druckfeder umgebenen Stellschrauben zueinander hin gezogen.

Aus den Nachteilen des beschriebenen Standes der Technik resultiert das die Erfindung initiierende Problem, bei einem gattungsgemäßen Wälzlager die geschilderten Nachteile, welche speziell bei einem großen Lagerdurchmesser von etwa einem oder mehreren Metern auftreten, zu beseitigen.
Die Lösung dieses Problems gelingt durch die Merkmale des Anspruchs 1.
Mit einem derartigen Federelement kann eine Vorspannung erzeugt und/oder eingestellt werden, insbesondere in einer Richtung lotrecht zu der Anschlußfläche des betreffenden Rings. Dies hat zur Folge, dass die Wälzkörper einer Wälzkörperreihe, selbst wenn diese von äußeren Lasten frei ist, dennoch mit einer geringen, durch die Vorspannung erzeugten Belastung beaufschlagt bleiben, wodurch das Gleiten der Wälzkörper sicher verhindert wird. Gleichzeitig wird eine unzulässig hohe Vorspannung durch die Nachgiebigkeit der Federn verhindert. Schließlich läßt sich mit einer derartigen Maßnahme eine Einengung des Lagerspiels durch die Spannkraft der Befestigungsschrauben und/oder infolge leichter Unebenheiten eines angeschlossenen Maschinen- oder Anlagenteils vermeiden. Die Vorspannungsrichtung von dem betreffenden Anschlußring bezieht sich auf die lokale Richtung im Bereich der einander maximal angenäherten Flächen von Anschluß- und Laufbahnring. Im Bereich dieser einander unmittelbar gegenüber liegenden Flächen werden die beiden Ringe voneinander weg, also auseinander gedrückt. Dies kann von einem Druckmittel bewirkt werden und hat den weiteren Vorteil, dass ein oder mehrere solche Druckmittel an der der eigentlichen Laufbahn gegenüber liegenden Seite, insbesondere Stirnseite, des Laufbahnrings angeordnet sein kann, also in achsparalleler Richtung geradewegs in Richtung zu den auf der Laufbahn abrollenden Wälzkörpern. Dadurch sind Verkantungen, Verwindungen od. dgl. ausgeschlossen. Andererseits durchgreifen diese Druckmittel oder deren Verankerungsmittel den Laufbahnring nicht, so dass eine durchgehende Laufbahnoberfläche gewährleistet ist und nicht von Verankerungsmitteln od. dgl. untebrochen ist. Schließlich lassen sich derartige, vorzugsweise Druck ausübende Federelemente besonders einfach herstellen; sie können bspw. in mulden- oder nutförmigen Vertiefungen des Anschlußrings angeordnet sein und sind daher äußerst platzsparend. Für steuerbare Druckmittel, bspw. für hydraulische Druckmittel, können die betreffenden Ansteuerleitungen in gerader Verlängerung bzw. in einer Flucht lotrecht zu der betreffenden Laufbahn herausgeführt sein und dort - vorzugsweise im Bereich der der Anschlußfläche gegenüber liegenden Stirnfläche des betreffenden Anschlußrings - kontaktiert bzw. angeschlossen werden, sofern dies nicht im Ring selbst erfolgt, bspw. durch einen rundum laufenden Verbindungskanal. Da sich die erforderliche Anpreß- oder Verstellmechanik somit in axialer Richtung unmittelbar unterhalb der betreffenden Laufbahn unterbringen läßt, können die Anschlußelemente des betreffenden Anschlußrings als Durchgangsbohrungen ausgebildet sein, ohne dass dazu der Querschnitt des betreffenden Rings vegrößert werden müßte. Indem Führungs- oder Verankerungsmittel vorwiegend auf Druck belastet sind und nicht auf Zug, ist die Gefahr eines Bruchs deutlich reduziert.
Obwohl rollenförmige Wälzkörper im Fall einer partiellen Entlastung der Gefahr von flächigem Verschleiß ausgesetzt wären, ist ein Gleiten oder Schleifen derselben nicht zu befürchten, weil sie durch die erfindungsgemäße Vorspannung in reibschlüssigem Kontakt mit den Laufbahnen gehalten werden.
Indem mehrere Reihen von Wälzkörpern vorgesehen sind, insbesondere wenigstens drei, lassen sich bspw. für Kräfte in beiden Axialrichtungen jeweils eine Reihe von Wälzkörpern vorsehen, und für Radialkräfte eine weitere Reihe.
Der Laufbahnring befindet sich nicht an dem Nasenring, sondern an dem jeweils anderen Anschlußring, drückt also die daran entlang rollenden Wälzkörper zur Mittelebene des Lagers hin, gegen einen Nasenring des anderen Anschlussrings, so dass die elastischen Druckmittel einer äußeren Lagerstimseite zugewandt und im Idealfall von dieser Seite aus zugänglich sind, bspw. zu Wartungszwecken.
Dabei werden durch einen Laufbahnring zwei Wälzkörperreihen in axialer Richtung unter Vorspannung gehalten, wovon sich vorzugsweise eine Wälzkörperreihe diesseits des Nasenrings und die andere jenseits des Nasenrings befindet. Eine derartige Anordnung ergibt sich, wenn an den beiden Flanken eines rundumlaufenden Bundes je eine Reihe von Wälzkörpem entlangläuft. Diese beiden Wälzkörperreihen sind dann sozusagen in axialer Richtung hintereinander geschaltet und können mit einer einzigen Spanneinrichtung gemeinsam unter Vorspannung gesetzt werden.
Es hat sich als günstig erwiesen, dass ein oder vorzugsweise beide Anschlußringe eine axiale Erstreckung aufweisen, die kleiner ist als der Außendurchmesser des radial äußeren Anschlußrings, beispielsweise kleiner als der maximale Durchmesser des Spaltes, bevorzugt kleiner als der Innendurchmesser des radial inneren Anschlußrings, und der vorzugsweise kleiner ist als der Außenradius des Außenrings, insbesondere kleiner als der Innenradius des Innenrings. Durch den erfindungsgemäßen Laufbahnring können derart filigrane Lagerringe, deren Eigensteifigkeit begrenzt ist, ohne weiteres auch bei Windkraftanlagen od. dgl. eingesetzt werden, weil eventuell durch Lasten und/oder durch eine unebene Anschlußkonstruktion verursachte Verformungen von dem beweglichen Laufbahnring toleriert werden.

Weitere Vorteile ergeben sich dadurch, dass der Laufbahnring eine etwa rechteckige Querschnittsgeometrie aufweist, wobei sich die längere Hauptachse parallel zu der betreffenden Anschlußfläche erstreckt. Eine solche Geometrie begünstigt eine minimale axiale Höhe eines erfindungsgemäßen Lagers, so dass die beiden Anschlußflächen zweier gegeneinander verdrehbarer Bauteile in einem minimalen gegenseitigen Abstand angeordnet werden können, was für viele Anwendungsfälle wichtig ist.

Die Erfindung läßt sich dahingehend weiterbilden, dass die Druckrichtung wenigstens eines federnden und/oder elastisch kompressiblen Elements parallel zu den Befestigungsbohrungen in dem betreffenden Anschlußring verläuft. Dadurch werden insbesondere Auswirkungen der Spannkräfte dieser Befestigungsmittel eliminiert. Würde dadurch bspw. der eigentliche Anschlußring verformt, so kann der Laufbahnring sich demgegenüber bewegen und also spannungsbedingte, lokale Verformungen ausgleichen.

Bevorzugt wird der Laufbahnring in Richtung zu der Anschlußfläche des betreffenden Anschlußrings hin gedrückt. Der Laufbahnring befindet sich dann an der dieser Anschlußfläche abgewandten Seite der betreffenden Wälzkörperreihe und kann bspw. von dieser eher zugänglichen Seite her eingestellt oder gewartet werden.

Die Erfindung zeichnet sich weiterhin aus durch wenigstens ein Kolbenelement, das von einem federnden und/oder elastisch kompressiblen Element druckbeaufschlagt und dabei gegen den Laufbahnring gepreßt wird. Da der Laufbahnring die Druckkraft eines oder mehrerer Kolbenelemente aufnimmt und über seine ringförmige Grundebene verteilt, ist es durchaus möglich, mehrere, diskrete, voneinander getrennte, insbesondere kolbenförmige Druckelemente zu verwenden anstatt einer über den gesamten Umfang verteilten, einheitlichen Druckeinrichtung. Ein solches Kolbenelement kann von dem eigentlichen Laufbahnring getrennt sein und bleiben, es kann mit jenem verbunden sein. Bei der Auswahl der besten Variante steht vor allem ein optimales mechanisches Verhalten der Gesamtanordnung im Vordergrund sowie eine leichte (De-) Montierbarkeit der Anordnung.
Wenigstens ein solches Kolbenelement kann in einer Führungsausnehmung des betreffenden Anschlußrings geführt sein, insbesondere in einer Bohrung desselben. Dabei kann die betreffende Querschnitts-Passung zwischen Kolbenelement und jener aufnehmenden Führungsausnehmung als Übergangspassung ausgebildet sein, damit dieselbe möglichst reibungsarm, gleichzeitig aber auch möglichst spielfrei ist.
Erfindungsgemäß ist weiterhin vorgesehen, dass wenigstens ein Kolbenelement gegenüber seiner Führungsausnehmung abgedichtet ist, bspw. durch wenigstens einen rundumlaufenden Dichtungsring. Damit kann das Eindringen von Schmiermittel aus dem Laufbahnbereich in den Bereich hinter dem Kolben vermieden werden, welches dort die Federungseigenschaften verändern könnte.
Der maximale Einfederungsweg wenigstens eines Kolbenelements ist begrenzt durch einen einstellbaren Anschlag. Dadurch ist das maximale Spiel des Laufbahnrings begrenzbar, so dass selbst bei einem defekten Federmittel das Lager grundsätzlich noch funktioniert. Außerdem erhält das erfindungsgemäße Lager dadurch definierte Eigenschaften, welche dessen Verhalten im worst case einer maximalen Auslenkung des Laufbahnrings charakterisieren.

Die Erfindung läßt sich dadurch realisieren, dass wenigstens ein federndes Element als Tellerfeder ausgebildet ist oder als Tellerfederpaket, dessen Tellerfedern vorzugsweise in Längsrichtung der Befestigungsbohrungen hintereinander geschichtet sind. Bevorzugt handelt es sich hierbei um Metallringe, deren Querschnitt jedoch nicht eben ist, sondern entlang eines sehr flachen Kegelmantels verläuft. In einem Tellerfederpaket können diese Ringe derart aufeinander geschichtet werden, dass sich die Öffnungswinkel der Kegelmäntel benachbarter Ringe abwechselnd nach oben und nach unten öffnen. Zur Stabilisierung eines derartigen Pakets können die betreffenden Ringe von einem rückwärtigen Teil oder Schaftbereich des Kolbens oder von einem darin verankerten Stab, einer darin eingeschraubten Schraube od. dgl. durchgriffen werden. Durch die Parallelanordnung zu den Befestigungsbohrungen ergibt sich eine Anpreßkraft lotrecht zu der betreffenden Laufbahnebene.

Die Erfindung erfährt eine bevorzugte Weiterbildung dadurch, dass sich wenigstens eine Tellerfeder oder wenigstens ein Tellerfederpaket auf dem selben Radialstrahl befindet wie eine Befestigungsbohrung des betreffenden Anschlußrings. An diesen Stellen ist der Einfluß der von den Befestigungsschrauben herrührenden Verspannungen in dem betreffenden Anschlußring am größten und also der Effekt der erfindungsgemäßen Vorspann-Einrichtung maximal.

Eine weitere Konstruktionsvorschrift besagt, dass wenigstens ein Tellerfederpaket teilweise von einem Kolbenelement durchgriffen wird, welches gegen den Laufbahnring drückt. Um die Federkraft von dem Tellerfederpaket aufzunehmen, weist das Kolbenelement eine rückwärtige Anlagefläche für das Tellerfederpaket auf; zu diesem Zweck ist diese Anlagefläche größer als die zentrale Ausnehmung in einer Tellerfeder.

Im Rahmen einer anderen Ausführungsform der Erfindung ist vorgesehen, dass wenigstens ein federndes, elastisch kompressibles und/oder verstellbares Element wenigstens eine Kammer aufweist, die mit einer Flüssigkeit befüllt oder befüllbar ist, insbesondere mit einem Hydrauliköl. Indem diese Kammer mit dem betreffenden Medium befüllt und anschließennd mit Druck beaufschlagt wird, wird eine entsprechende Druckkraft gegen die innere Oberfläche der Kammer ausgeübt. Indem - wie die Erfindung weiterhin vorsieht - sich die Kammer am rückwärtigen Ende eines Kolbenelements befindet, wirkt diese Druckkraft im Bereich des Kolbenelements auf dessen Rückseite ein und schiebt dieses dadurch gegen den an dessen Vorderseite platzierten Laufbahnring, um jenen gegen die dortige Wälzkörperreihe zu pressen.

Schließlich entspricht es der Lehre der Erfindung, dass wenigstens ein elastisch kompressibles Element in eine Vertiefung, insbesondere in eine Bohrung oder in eine rundumlaufende Nut, eingelegt ist. Während ein mittels Tellerfedern abgefedertes Kolbenelement in einer rückwärtig offenen Ausnehmung geführt sein kann, und die Kammer für ein hydraulisches Druckmedium, insbesondere Hydrauliköl, rückseitig verschließbar ausgestaltet sein kann, läßt sich die Anordnung auch dahingehend treffen, dass in dem Anschlußring eine rückseitig geschlossene Ausnehmung vorgesehen ist zur Aufnahme eines elastisch kompressiblen Elements, bspw. aus Hartgummi oder einem ggf. noch härteren Material, welches gegen die Rückseite eines vor oder in diese Ausnehmung gesetzten Kolbenelements oder des Laufbahnrings direkt drückt.

Die Vorspannung kann neben Tellerfederpaketen auch durch andere Federbauformen, durch dauerelastische Elemente, aber auch pneumatisch oder hydraulisch erzeugt werden. Über den Laufbahnring wird die erzeugte Vorspannung auf die Wälzkörperreihe übertragen. Es hat sich als vorteilhaft erwiesen, den Belastungsbetrag der Vorspannung auf einen Wert einzustellen, der innerhalb eines Bereichs von 2 % bis 20 % der dynamischen Tragfähigkeit liegt. Bei Werten oberhalb dieses Bereichs kann der negative Einfluß auf die Lebensdauer überwiegen, unterhalb dieses Bereichs kann die Wirksamkeit der Vorspannung nicht sichergestellt sein.

Die Federelemente werden in zylindrischen Vertiefungen im Haltering, dem Nasenring oder den Laufbahnring eingebracht. Wenn sie im Haltering eingebracht sind, kann von außen auf die Vorspannung, z.B. über Schrauben auf die Vorspannung Einfluß genommen werden. Wird die Vorspannung pneumatisch oder hydraulisch erzeugt, kann über eine entsprechende Ringleitungen die Energie zugeführt und die Vorspannung zentral geregelt werden. Damit kann auch auf die Laufruhe Einfluß genommen werden und ein etwaiger Verschleiß der Laufbahnen zumindest teilweise kompensiert werden.

Ebenso ist es denkbar, dass die Federelemente in einer oder mehreren, ringförmig umlaufenden Nuten eingebracht sind. Eine solche Nut kann auch zur Führung des Laufbahnrings und zur Aufnahme der Federelemente verwendet werden. In diesem Fall eignet sich besonders ein in eine solche Nut einlegbares, elastisches Profil als Federelement.

Typischerweise werden die Laufbahnen großer Drehverbindungen gehärtet, insbesondere induktiv gehärtet. Dies kann auch mit dem erfindungsgemäßen Laufbahnring geschehen. Dabei befindet sich prozessbedingt zwischen dem Anfang und dem Ende der im Vorschubverfahren gehärteten Laufbahnen eine schmale Stelle mit reduzierter Härte. Dieser sog. Härteschlupf kann durch Abschleifen der betreffenden Stelle tiefer gelegt werden als der übrige Bereich der betreffenden Laufbahn, so dass die darüber rollenden Wälzkörper an dieser Stelle keine Last übertragen. Werden die Laufbahnen und der Zwischenring durch ein spezielles Verfahren induktiv schlupflos gehärtet, wofür mindestens zwei Induktionsköpfe erforderlich sind, so gibt es keinen Härteschlupf, und die Laufbahn muß nicht hinterschliffen werden, was sich vorteilhaft auf die Laufruhe des Lagers auswirkt.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
Fig. 1 : einen Schnitt quer durch ein erfindungsgemäßes Wälzlager, teilweise abgebrochen; und
Fig. 2 : eine Vergrößerung des Details II aus Fig. 1.

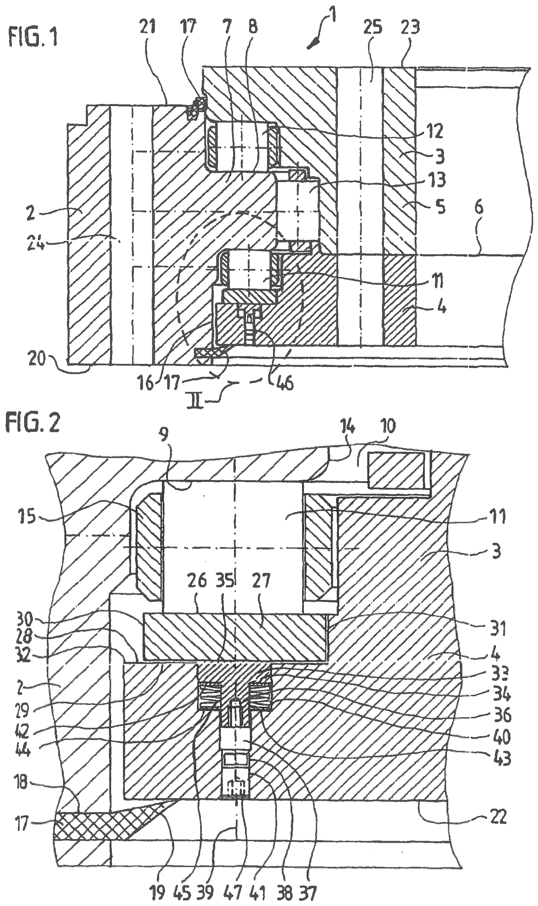

In Fig. 1 ist ein Schnitt quer durch ein erfindungsgemäßes, ringförmiges Wälzlager 1 dargestellt. Es handelt sich um ein Großwälzlager, wie es bspw. bei Windkraftanlagen zum Einsatz gelangt, bspw. als dortiges Rotor- oder Hauptlager. Ähnliche Bauformen könnten durchaus natürlich auch zu anderen Zwecken eingesetzt werden, bspw. als Blattlager einer Windkraftanlage oder als deren Azimut- oder Maschinenhauslager.

Man erkennt in dem dargestellten Fall einen als Nasenring ausgebildeten Außenring 2 und einen konzentrisch darin angeordneten Innenring 3, der bevorzugt in zwei Teilringe 4, 5 unterteilt ist, welche entlang einer Ebene 6 aneinanderstoßen. Der durch diese aneinander gesetzten Teilringe 4, 5 gebildete Ring 3 hat einen etwa C-förmigen Querschnitt und umgibt die Nase bzw. den rundumlaufenden Bund 7 des Nasenrings 2 an dessen oberer und unterer Stirnseite 8, 9 mit einem Spalt 10, so dass die beiden Ringe 2, 3 sich gegeneinander verdrehen können.

In dem Spalt 10 sind bei der dargestellten Ausführungsform insgesamt drei Reihen von Wälzkörpern 11, 12, 13 vorgesehen, die allesamt an dem Bund 7 entlang rollen, nämlich einerseits an dessen oberer, ebener Stirnseite 8 und an dessen unterer, ebener Stirnseite 9, sowie außerdem an dessen diese beiden Stirnseiten 8, 9 verbindender, hohlzylindrischer Fläche 14. Falls der Nasenring dagegen als Innenring ausgebildet wäre - was auch denkbar ist - so wäre die Verbindungsfläche 14 an dem Bund 7 nicht hohlzylindrisch, sondern zylindrisch.

Als Wälzkörper 11, 12, 13 dienen in diesem Ausführungsbeispiel Rollen; es sind aber auch kegelförmige Wälzkörper denkbar, ferner auch Kugeln. Die einzelnen Wälzkörper 11, 12, 13 werden durch Käfige 15 an ihren Relativpositionen zueinander gehalten.

Bevorzugt ist der Spalt 10 mit einem Schmiermittel gefüllt, bspw. mit Schmierfett. Damit dieses nicht an den Mündungsbereichen 16 des Spaltes 10 austreten kann, sind diese Bereiche 16 abgedichtet, vorzugsweise mittels je eines rundumlaufenden Dichtungsrings 17, der mit seinem querschnittlich rückwärtigen Bereich in eine rundumlaufende Nut 18 eines Anschlußrings 2, 3 eingelegt ist und mit seinem vorderen Querschnittsbereich, der sich bevorzugt zu einer Dichtlippe 19 verjüngt, durch seine ihm innewohnende Elastizität an einen Oberflächenbereich des jeweils anderen Ringes 3, 2 gepreßt wird und dort entlangläuft.

Beide Ringe 2, 3 haben jeweils zwei im Wesentlichen ebene Stirnflächen 20, 21, 22, 23, von denen jeweils eine pro Ring 2, 3 als Anschlußfläche dient. Diese belden Anschlußflächen 20, 23 sind über die benachbarte Stirnfläche 22, 21 des jeweils anderen Rings 3, 2 erhaben, so dass sich ein derartiges Lager 1 problemlos und ohne zu schleifen zwischen ebenen Anschlußflächen zweier Anlagen- und/oder Maschinenteile einfügen läßt. Die beiden Anschlußflächen 20, 23 sind parallel zueinander.

Zur Festlegung je eines Anschlußrings 2, 3 an je einem derartigen Anlagen- oder Maschinenteil oder Fundament weist jeder Anschlußring 2, 3 eine Mehrzahl von kranzförmig entlang des betreffenden Rings 2, 3 verteilt angeordneten Befestigungsbohrungen 24, 25 auf, welche die betreffende Anschlußfläche 20, 23 lotrecht durchsetzen. Während diese Befestigungsbohrungen 24, 25 im dargestellten Beispiel als den jeweiligen Anschlußring zwischen dessen beiden Stirnseiten 20, 21 bzw. 22, 23 komplett durchsetzende Bohrungen ausgebildet sind, könnten manche oder alle Befestigungsbohrungen 24, 25 auch als mit Innengewinde versehene Sacklochbohrungen ausgebildet sein.

Während alle Laufbahnen des Nasenrings 2 direkt an dessen rundumlaufenden Bund 7 ausgebildet sind, insbesondere durch Bearbeitung desselben Formkörpers, worin auch die Befestigungsbohrungen 24 eingearbeitet, insbesondere eingebohrt sind, sind nur zwei der drei Laufbahnen des C-förmigen Rings 3 direkt an diesem ausgebildet, insbesondere durch Bearbeitung desselben Formkörpers, worin auch die Befestigungsbohrungen 25 eingearbeitet, insbesondere eingebohrt sind. Im dargestellten Beispiel handelt es sich hier um den die Anschlußfläche 23 tragenden Teilring 5.

Bevorzugt ist die dritte Laufbahn des querschnittlich C-förmigen Rings 3 nicht an diesem direkt angeordnet - also weder an dem die Anschlußfläche 23 aufweisenden Teilring 5 noch an dem anderen Teilring 4; der Teilring 4 trägt daher im vorliegenden Beispiel überhaupt keine Laufbahn. Stattdessen ist die betreffende Laufbahn 26 - woran die Wälzkörper 11 entlang laufen - an einem eigenen Laufbahnring 27 angeordnet, der im Bereich einer Auskehlung 28 des betreffenden, querschnittlich C-förmigen Rings 3 - insbesondere an dessen Teilring 4 - angeordnet ist.

Im dargestellten Beispiel hat dieser Laufbahnring 27 einen rechteckigen Querschnitt, dessen längere Seiten den ebenen Stirnseiten 26, 29 des Laufbahnrings 27 entsprechen, während dessen kürzere Seiten einer zylindrischen Mantelfläche 30 des Laufbahnrings 27 einerseits und einer hohlzylindrischen Mantelfläche 31 desselben andererseits entsprechen. Die der Laufbahn 26 abgewandte Seite 29 würde auf einer ebenen Begrenzungsfläche 32 der Auskehlung 28 aufliegen, wenn sie nicht durch ein oder mehrere Kolbenelemente 33 von dieser weg und zu den Wälzkörpern 11 hin gedrückt würde.

In Fig. 2 ist ein derartiges Kolbenelement 33 vergrößert dargestellt. Es weist einen Kopf 34 auf mit einer ebenen Oberseite 35 zur Anlage an der ebenen Rückseite 29 des Laufbahnrings 27, sowie einen rückwärtigen, gegenüber dem Kopf 34 verjüngten Schaftbereich 36. Bei der dargestellten Ausführungsform haben der Kopf 34 und der Schaft 36 jeweils einen kreisrunden Querschnitt mit in einer gemeinsamen Flucht liegenden Mittelpunkten. Am freien Ende des Schaftes 36 kann ein Anschlagelement 37 angeschraubt sein, vorzugsweise von gleichem Querschnitt wie der Schaft 36.

Dieses Kolbenelement 33 ist in einer Ausnehmung 38 des betreffenden Rings, vorzugsweise des C-förmigen Rings, insbesondere des Innenrings 3, hier speziell des Teilrings 4, in Längsrichtung 39 seines Schaftes 36 verschiebbar geführt. Diese Schaft-Längsrichtung 39 entspricht demnach auch der Längsrichtung der Ausnehmung 38, welche wiederum lotrecht zu der Anschlußfläche 23 verläuft bzw. parallel zu den Befestigungsbohrungen 25.

Die Ausnehmung 38 durchsetzt den betreffenden Ring 3, 4 vollständig von der Begrenzungsfläche 32 der Auskehlung 28 bis zu der Stirnseite 22 und hat einen stufigen Querschnitt. Ein in Fig. 2 oberer Bereich 40 nahe des Laufbahnrings 27 bzw. nahe der Begrenzungsfläche 32 der Auskehlung 28 hat einen dem Kopf 34 etwa entsprechenden Querschnitt, während ein in Fig. 2 unterer Bereich 41 der Ausnehmung 38 nahe der Stirnseite 22 querschnittlich etwa dem Querschnitt des Kolbenschaftes 36 entspricht und also gegenüber dem oberen Bereich 40 querschnittlich verjüngt ist.

Der obere Bereich 40 ist in seiner axialen Erstreckung länger als die Höhe der kopfartigen Verbreiterung 34 des Kolbenelements 33. Da - wie später noch erläutert wird - das Kolbenelement 33 stets nach oben gepreßt wird, wo es gegen die Unterseite 29 des Laufbahnrings 27 stößt, liegt die Oberseite 35 des Kopfs 34 im Normalfall stets in einer Flucht mit der Begrenzungsfläche 32 der Auskehlung 28 oder darüber. Deshalb verbleibt unterhalb der Abstufung 42 des Kolbenelements 33 zwischen dessen Kopf 34 und Schaft 36 einerseits und oberhalb der Abstufung 43 der Ausnehmung 38 zwischen dessen erweitertem oberen Bereich 40 und dessen verjüngtem unteren Bereich 41 ein Ringraum 44 frei.

Dieser Ringraum 44 dient zur Aufnahme eines Pakets von aufeinandergeschichteten, jeweils ringförmigen Tellerfedern 45. Diese bestehen aus ringförmigen Scheiben, welche jedoch nicht eben sind, sondern geringfügig kegelförmig verformt. Sie liegen jeweils mit abwechselnd nach oben und nach unten weisenden Kegelöffnungen aufeinander, berühren sich also jeweils nur entlang ihrer inneren oder äußeren Ränder. Die oberste und unterste Tellerfeder 45 liegt jeweils an einer Abstufung 42, 43 an und drückt dieselben auseinander, wodurch das Kolbenelement 33 einen Druck nach oben verspürt - in diesem Falle in Richtung zu der Anschlußfläche 23 - und dabei den Laufbahnring 27 gegen die betreffende Reihe von Wälzkörpern 11 drückt. Ggf. könnte zwischen einer äußersten Tellerfeder 45 und der betreffenden Abstufung 42, 43 (jeweils) noch eine Unterlegscheibe vorgesehen sein.

Der verjüngte Bereich 41 der Ausnehmung 38 kann in seinem unteren Bereich abermals verjüngt sein, insbesondere auf einen kleineren Querschnitt als das Anschlagelement 37 am freien unteren Ende des Kolbenschafts 36; die dadurch entstehende weitere Abstufung 46 bildet dann ein Widerlager für das Anschlagelement 37, welches bei einer Überlastung des Tellerfederpakets 45 schließlich durch die Abstufung 46 abgestützt wird.
Ferner könnte der unterste Teil des verjüngten Bereichs 41 unterhalb der Abstufung 46 mit einem Innengewinde versehen sein, so dass die Ausnehmung 38 durch Einschrauben einer Kappe 47, Schraube od. dgl. verschlossen werden kann.
Bevorzugt ist der Laufbahnring 27 oberflächengehärtet, insbesondere im Bereich seiner Laufbahn 26 und/oder seiner Unterseite 29. Falls die axiale Erstreckung des Laufbahnrings 27 nicht allzu groß ist, könnte der Laufbahnring 27 auch durchgehärtet sein.
Die Federkonstante und Anzahl der Tellerfedern 45 pro Paket sind derart eingestellt, dass die im normalen Betriebsfall von diesen Tellerfederpaketen 45 auf den Laufbahnring 27 ausgeübte und sodann von dort weiter auf die Wälzkörper 11 übertragene Vorspannung etwa zwischen 2 % und 20 % der dynamischen Tragfähigkeit dieser Wälzkörperreihe 11 liegt.

## Patentansprüche

1. Wälzlager (1) für eine Windkraftanlage, insbesondere Rotor- oder Hauptlager für eine Windkraftanlage, mit wenigstens zwei zueinander konzentrischen Anschlussringen (2, 3), die durch einen Spalt (10) voneinander getrennt sind, worin mehrere Reihen von Wälzkörpern (11, 12, 13) entlang von Laufbahnen an beiden Ringen (2, 3) entlang rollen, so dass die beiden Ringe (2, 3) um ihre gemeinsame Achse gegeneinander verdrehbar sind, wobei jeder Ring (2, 3) wenigstens eine ebene, ringförmige, vorzugsweise erhabene Anschlussfläche (20, 23) zum Anschluss an ein Maschinen- oder Anlagenteil, Chassis oder Fundament aufweist, wobei die Anschlussflächen (20, 23) parallel zueinander verlaufen und von einer Mehrzahl von Befestigungsbohrungen (24, 25) etwa lotrecht durchsetzt sind zum Hindurchstecken und/oder Einschrauben von Befestigungsschrauben, wobei einer der beiden Anschlussringe (2, 3) als sog. Nasenring ausgebildet ist mit einem rundum laufenden Bund (7), der an seiner ebenen Ober- und Unterseite (8, 9) mit einem Spalt (10) von dem anderen Ring (3, 2) umgriffen wird, **dadurch gekennzeichnet, dass** eine Laufbahn (26) wenigstens einer Wälzkörperreihe (11) an einem von dem betreffenden Anschlussring (2, 3) getrennten Laufbahnring (27) ausgebildet ist, der durch eine Einrichtung mit wenigstens einem federnden, elastisch kompressiblen und/oder verstellbaren Element (33, 45, 49) in einer Richtung lotrecht zu den Anschlussflächen (20, 23) von dem betreffenden Anschlussring (2, 3) weg gedrückt wird und zwei Reihen rollenförmiger Wälzkörper (11, 12) in axialer Richtung unter Vorspannung hält, wovon sich eine Wälzkörperreihe (11) diesseits des Bundes (7) des Nasenrings (2, 3) und die andere jenseits des Bundes (7) des Nasenrings (2, 3) befindet, wobei wenigstens ein Kolbenelement (33) von einem federnden und/oder elastisch kompressiblen Element (45, 49) druckbeaufschlagt und dabei gegen den Laufbahnring (27) gepresst wird, wobei der maximale Einfederungsweg wenigstens eines Kolbenelements (33) durch einen einstellbaren Anschlag (37, 46) begrenzt ist.

2. Wälzlager (1) nach Anspruch 1, **dadurch gekennzeichnet, dass** ein oder vorzugsweise beide Anschlussringe (2, 3) eine axiale Erstreckung aufweisen, die kleiner ist als der Außendurchmesser des radial äußeren Anschlussrings (2), beispielsweise kleiner als der maximale Durchmesser des Spaltes (10), bevorzugt kleiner als der Innendurchmesser des radial inneren Anschlussrings (3), und der vorzugsweise kleiner ist als der Außenradius des Außenrings (2), insbesondere kleiner als der Innenradius des Innenrings (3).

3. Wälzlager (1) nach einem der vorhergehenden Ansprüche, **dadurch gekennzeichnet, dass** der Laufbahnring (27) eine etwa rechteckige Querschnittsgeometrie aufweist, wobei sich die längere Hauptachse parallel zu einer Anschlussfläche (20, 23) erstreckt.

4. Wälzlager (1) nach einem der vorhergehenden Ansprüche, **dadurch gekennzeichnet, dass** die Druckrichtung wenigstens eines federnden, elastisch kompressiblen und/oder verstellbaren Elements (33, 45, 49) parallel zu den Befestigungsbohrungen (24, 25) in dem betreffenden Anschlussring (2, 3) verläuft.

5. Wälzlager (1) nach einem der vorhergehenden Ansprüche, **dadurch gekennzeichnet, dass** der Laufbahnring (27) in Richtung zu der Anschlussfläche (20, 23) des betreffenden Anschlussrings (2, 3) hin gedrückt wird.

6. Wälzlager (1) nach einem der vorhergehenden Ansprüche, **dadurch gekennzeichnet, dass** wenigstens ein Kolbenelement (33) in einer Führungsausnehmung (38) des betreffenden Anschlussrings (2, 3) geführt ist, insbesondere in einer Bohrung desselben.

7. Wälzlager (1) nach Anspruch 6, **dadurch gekennzeichnet, dass** wenigstens ein Kolbenelement (33) gegenüber seiner Führungsausnehmung (38) abgedichtet ist, bspw. durch wenigstens einen rundumlaufenden Dichtungsring (54).

8. Wälzlager (1) nach einem der vorhergehenden Ansprüche, **dadurch gekennzeichnet, dass** wenigstens ein federndes Element als Tellerfeder (45) ausgebildet ist oder als Tellerfederpaket, dessen Tellerfedern (45) vorzugsweise in Längsrichtung der Befestigungsbohrungen (24, 25) hintereinander geschichtet sind.

9. Wälzlager (1) nach Anspruch 8, **dadurch gekennzeichnet, dass** sich wenigstens eine Tellerfeder (45) oder wenigstens ein Tellerfederpaket (45) auf dem selben Radialstrahl von der Drehachse des Lagers (1) befindet wie eine Befestigungsbohrung (24, 25) des betreffenden Anschlussrings (2, 3).

10. Wälzlager (1) nach einem der vorhergehenden Ansprüche in Verbindung mit Anspruch 8 oder 9, **dadurch gekennzeichnet, dass** wenigstens ein Tellerfederpaket (45) von einem Kolbenelement (33) durchgriffen wird, welches gegen den Laufbahnring (27) drückt.

11. Wälzlager (1) nach einem der vorhergehenden Ansprüche, **dadurch gekennzeichnet, dass** wenigstens ein federndes, elastisch kompressibles und/oder verstellbares Element wenigstens eine Kammer (38, 51) aufweist, die mit einer Flüssigkeit befüllt oder befüllbar ist, insbesondere mit einem Hydrauliköl.

12. Wälzlager (1) nach einem der vorhergehenden Ansprüche in Verbindung mit Anspruch 11, **dadurch gekennzeichnet, dass** sich die Kammer (38, 51) am rückwärtigen Ende eines Kolbenelements (33) befindet.

13. Wälzlager (1) nach einem der vorhergehenden Ansprüche, **dadurch gekennzeichnet, dass** wenigstens ein elastisch kompressibles Element (49) in eine Vertiefung, insbesondere in eine Bohrung oder in eine rundumlaufende Nut (48) eingelegt ist.

## Claims

1. Rolling bearing (1) for a wind power plant, in particular rotor bearing or main bearing for a wind power plant, with at least two connection rings (2, 3) which are concentric with one another and are separated from one another by a gap (10), in which a plurality of rows of rolling bodies (11, 12, 13) roll along raceways at both rings (2, 3) so that the two rings (2, 3) are rotatable about their common axis relative to one another, each ring (2, 3) having at least one flat, annular, preferably raised connection surface (20, 23) for connecting to a machine part or system part, chassis or base, the connection surfaces (20, 23) running parallel to one another and being approximately perpendicularly interspersed by a plurality of fastening bores (24, 25) for pushing through and / or screwing in fastening screws, one of the two connection rings (2, 3) being formed as a so-called nose ring with a circumferential collar (7) which is encompassed by the other ring (3, 2) at its plane top side and bottom side (8, 9) with a gap (10), **characterized in that** a raceway (26) of at least one row of rolling elements (11) is formed on one raceway ring (27) separated from the corresponding connection ring (2, 3), which is pushed away by a device with at least one resilient, elastically compressible and / or adjustable element (33, 45, 49) in a direction perpendicular to the connection surfaces (20, 23) of the corresponding connection ring (2, 3) and holds two rows of cylindrical rolling bodies (11, 12) under bias in an axial direction, one row of rolling elements (11) being on one side of the collar (7) of the nose ring (2, 3) and the other being on the other side of the collar (7) of the nose ring (2, 3), wherein at least one piston element (33) is pressurized by a resilient and / or elastically compressible element (45, 49) and is pressed against the raceway ring (27), wherein the maximum deflection path of at least one piston element (33) is limited by an adjustable stopper (37, 46).

2. Rolling bearing (1) according to claim 1, **characterized in that** one or preferably both connection rings (2, 3) have an axial extension which is smaller than the outer diameter of the radially outer connection ring (2), for example smaller than the maximum diameter of the gap (10), preferably smaller than the inner diameter of the radially inner connection ring (3), and which is preferably smaller than the outer radius of the outer ring (2), in particular smaller than the inner radius of the inner ring (3).

3. Rolling bearing (1) according to one of the preceding claims, **characterized in that** the raceway ring (27) has an approximately rectangular cross-sectional geometry, the longer main axis extending parallel to a connection surface (20, 23).

4. Rolling bearing (1) according to one of the preceding claims, **characterized in that** the pressure direction of at least one resilient, elastically compressible and / or adjustable element (33, 45, 49) extends parallel to the fastening bores (24, 25) in the corresponding connection ring (2, 3).

5. Rolling bearing (1) according to one of the preceding claims, **characterized in that** the raceway ring (27) is pressed towards the connecting surface (20, 23) of the corresponding connection ring (2, 3).

6. Rolling bearing (1) according to one of the preceding claims, **characterized in that** at least one piston element (33) is guided in a guide recess (38) of the corresponding connection ring (2, 3), in particular in a bore thereof.

7. Rolling bearing (1) according to claim 6, **characterized in that** at least one piston element (33) is sealed off from its guide recess (38), for example by at least one circumferential sealing ring (54).

8. Rolling bearing (1) according to one of the preceding claims, **characterized in that** at least one resilient element is formed as a plate spring (45) or as a plate spring assembly, the plate springs (45) of which are preferably stacked consecutively in a longitudinal direction of the fastening bores (24, 25).

9. Rolling bearing (1) according to claim 8, **characterized in that** at least one plate spring (45) or at least one plate spring assembly (45) is located on a same radial beam from the axis of rotation of the bearing (1) as a fastening bore (24, 25) of the corresponding connection ring (2, 3).

10. Rolling bearing (1) according to one of the preceding claims in connection with claim 8 or 9, **characterized in that** at least one plate spring assembly (45) is penetrated by a piston element (33) which presses against the raceway ring (27).

11. Rolling bearing (1) according to one of the preceding claims, **characterized in that** at least one resilient, elastically compressible and / or adjustable element has at least one chamber (38, 51) which is filled or can be filled with a liquid, in particular with a hydraulic oil.

12. Rolling bearing (1) according to one of the preceding claims in connection with claim 11, **characterized in that** the chamber (38, 51) is located at a rear end of a piston element (33).

13. Rolling bearing (1) according to one of the preceding claims, **characterized in that** at least one elastically compressible element (49) is inserted into a recess, in particular into a bore or a circumferential groove (48).

## Revendications

1. Palier à roulement (1) pour une éolienne, en particulier un palier de rotor ou un palier principal pour une éolienne, comportant au moins deux bagues de raccordement (2, 3) concentriques l'une par rapport à l'autre, séparées par un interstice (10) dans lequel plusieurs rangées de corps de roulement (11, 12, 13) roulent le long de chemins de roulement au niveau des deux bagues (2, 3) de sorte que les deux bagues (2, 3) peuvent tourner l'une par rapport à l'autre autour de leur axe commun, dans lequel chaque bague (2, 3) présente au moins une surface de raccordement (20, 23) plane, annulaire, de préférence en saillie, destinée à être raccordée à une partie de machine ou d'installation, à un châssis ou à une embase, lesdites surfaces de raccordement (20, 23) étant parallèles et traversées approximativement perpendiculairement par une pluralité de trous de fixation (24, 25) destinés au passage et/ou au vissage de vis de fixation, l'une des deux bagues de raccordement (2, 3) étant réalisée sous forme de bague dite à talon avec un épaulement (7) sur tout le pourtour qui est entouré au niveau de sa face supérieure et inférieure (8, 9) plane avec un interstice (10) de l'autre bague (3, 2), **caractérisé en ce qu'**un chemin de roulement (26) d'au moins une rangée de corps de roulement (11) est réalisé au niveau d'une bague de chemin de roulement (27) séparée de la bague de raccordement (2, 3) concernée, ladite bague de chemin de roulement étant repoussée à l'écart de la bague de raccordement (2, 3) concernée dans une direction perpendiculaire aux surfaces de raccordement (20, 23) par l'intermédiaire d'un dispositif comportant au moins un élément (33, 45, 49) élastique, compressible et/ou réglable élastiquement et maintenant sous précontrainte deux rangées de corps de roulement (11, 12) en forme de rouleau dans une direction axiale, dont une rangée de corps de roulement (11) se trouve d'un côté de l'épaulement (7) de la bague à talon (2, 3) et l'autre de l'autre côté de l'épaulement (7) de la bague à talon (2, 3), dans lequel au moins un élément de piston (33) est alimenté en pression par un élément (45, 49) élastique et/ou compressible élastiquement tout en étant pressé contre la bague de chemin de roulement (27), la course de compression maximale d'au moins un élément de piston (33) étant limitée par une butée réglable (37, 46).

2. Palier à roulement (1) selon la revendication 1, **caractérisé en ce qu'**une ou de préférence les deux bagues de raccordement (2, 3) présentent une extension axiale qui est inférieure au diamètre extérieur de la bague de raccordement (2) radialement extérieure, par exemple inférieure au diamètre maximal de l'interstice (10), de préférence inférieure au diamètre intérieur de la bague de raccordement (3) radialement intérieure, et qui est de préférence inférieure au rayon extérieur de la bague extérieure (2), en particulier inférieure au rayon intérieur de la bague intérieure (3).

3. Palier à roulement (1) selon l'une des revendications précédentes, **caractérisé en ce que** la bague de chemin de roulement (27) présente une géométrie de section transversale approximativement rectangulaire, dans lequel le plus long axe principal s'étend parallèlement à une surface de raccordement (20, 23).

4. Palier à roulement (1) selon l'une des revendications précédentes, **caractérisé en ce que** le sens de pression d'au moins un élément (33, 45, 49) élastique, compressible et/ou réglable élastiquement est parallèle aux trous de fixation (24, 25) dans la bague de raccordement (2, 3) concernée.

5. Palier à roulement (1) selon l'une des revendications précédentes, **caractérisé en ce que** la bague de chemin de roulement (27) est poussée en direction de la surface de raccordement (20, 23) de la bague de raccordement (2, 3) concernée.

6. Palier à roulement (1) selon l'une des revendications précédentes, **caractérisé en ce qu'**au moins un élément de piston (33) est guidé dans un évidement de guidage (38) de la bague de raccordement (2, 3) concernée, en particulier dans un trou de cette dernière.

7. Palier à roulement (1) selon la revendication 6, **caractérisé en ce qu'**au moins un élément de piston (33) est rendu étanche par rapport à son évidement de guidage (38), par exemple par au moins une bague d'étanchéité périphérique (54).

8. Palier à roulement (1) selon l'une des revendications précédentes, **caractérisé en ce qu'**au moins un élément élastique est réalisé sous forme de rondelle ressort (45) ou sous forme de jeu de rondelles ressorts dont les rondelles ressorts (45) sont empilées successivement de préférence dans le sens longitudinal des trous de fixation (24, 25)

9. Palier à roulement (1) selon la revendication 8, **caractérisé en ce qu'**au moins une rondelle ressort (45) ou au moins un jeu de rondelles ressorts (45) se trouve sur le même rayon radial de l'axe de rotation du palier (1) comme un trou de fixation (24, 25) de la bague de raccordement (2, 3) concernée.

10. Palier à roulement (1) selon l'une des revendications précédentes prise en combinaison avec la revendication 8 ou 9, **caractérisé en ce qu'**au moins un jeu de rondelles ressorts (45) est traversé par un élément de piston (33) qui est appliqué par pression contre la bague de chemin de roulement (27).

11. Palier à roulement (1) selon l'une des revendications précédentes, **caractérisé en ce qu'**au moins un élément élastique, compressible et/ou réglable élastiquement comporte au moins une chambre (38, 51) qui est remplie ou peut être remplie d'un liquide, en particulier d'une huile hydraulique.

12. Palier à roulement (1) selon l'une des revendications précédentes prise en combinaison avec la revendication 11, **caractérisé en ce que** la chambre (38, 51) se trouve au niveau de l'extrémité arrière d'un élément de piston (33).

13. Palier à roulement (1) selon l'une des revendications précédentes, **caractérisé en ce qu'**au moins un élément compressible élastiquement (49) est inséré dans une cavité, en particulier dans un trou ou dans une rainure périphérique (48).
